**Europäisches Patentamt**

**European Patent Office**

**Office européen des brevets**

(19)

(11) Veröffentlichungsnummer: **0 515 952 A2**

(12)

# EUROPÄISCHE PATENTANMELDUNG

(21) Anmeldenummer: **92108415.8**

(22) Anmeldetag: **19.05.92**

(51) Int. Cl.5: **B31C 3/00**, B32B 15/04, B32B 27/32, //E04G13/02, B28B7/34

(30) Priorität: **29.05.91 ES 9101302**

(43) Veröffentlichungstag der Anmeldung: **02.12.92 Patentblatt 92/49**

(84) Benannte Vertragsstaaten: **BE DE FR IT NL**

(71) Anmelder: **Ruiz Navarro, Dolores Guendalina Cuesta de las Piedras s/n Crevillente (Alicante)(ES)**

(72) Erfinder: **Ruiz Navarro, Dolores Guendalina Cuesta de las Piedras s/n Crevillente (Alicante)(ES)**

(74) Vertreter: **Meyer-Roxlau, R.F., Dipl.-Ing. Anwaltskanzlei Wey & Partner Widenmeyerstrasse 49 W-8000 München 22(DE)**

(54) **Verfahren zum Herstellen von Pfeilerverschalungen.**

(57) Bei einem Verfahren zum Herstellen von Verschalungen für Pfeiler wird ein Rohr aus einer Vielzahl von Bändern gebildet, die von einem anfänglichen Wickel stammen. Dieser besteht aus einem lamelierten Komplex aus Polyethylenfolie, Karton, Aluminium und Polyethylenfolie und läuft in Bandform durch einen Tunnel mit einer Temperatur von weniger als 100°C, um den Schmelzzustand der Polyethylenfolien hervorzurufen.

Hierdurch lassen sich die Bänder beim Auflaufen auf einem Drehdorn innig miteinander verschweißen. Die Bänder liegen dabei mit etwa 50 % ihrer Breite auf dem jeweils vorausgehenden Band auf und sind wegen ihrer Verschweißung Zug und Druck unterworfen. Das so auf dem Dorn gebildete Rohr wird von diesem in geeigneten Längen abgeschnitten.

FIG. 2

EP 0 515 952 A2

Es ist allgemein bekannt, daß Verschalungen ein notwendiges Mittel in Verbindung mit Eisenarmierungen entweder in waagerechter Positionierung für die Herstellung von Trägern oder in vertikaler Positionierung für die Herstellung von Pfeilern, wie im vorliegenden Fall behandelt, sind.

In der Vergangenheit sind verschiedene Mittel und Materialien für die Herstellung von Verschalungen verwendet worden, die die handwerkliche Verwendung von Holzbrettern und die Verwendung von Metallteilen aus Eisenblech umfassen, die an einem an einigen Seiten mit Ansätzen und an anderen Seiten mit Durchbohrungen versehenen Rahmen befestigt sind, um die Einpassung und den Zusammenbau der so gebildeten Platten zu ermöglichen.

In neuerer Zeit haben sich andere, vielseitiger verwendbare, schnellere und wirtschaftlichere Lösungen ergeben, beispielsweise zylindrische Verschalungen gemäß ES-GM 8 701 530 und Verschalungen für rechteckige Pfeiler gemäß ES-GM 8 903 322. Dort werden Verschalungen verwendet, die von einer Vielzahl von schraubenförmig gewikkelten Kartonbändern gebildet sind, die mittels gleichermaßen gewickelter Zwischenbänder aus Aluminium verbunden sind (ES-GM 8 701 530) und in der Richtung einer Mantellinie offen ausgebildet sein können, um ihre Rückgewinnung durch Deformierung zu ermöglichen, wenn der eisenarmierte Beton abgebunden ist. Diese Verschalungen können einen viereckigen oder rechteckigen Querschnitt haben, wenn sich im Inneren der Verschalung je ein Teil aus expandiertem Polystyrol mit der Form eines zylindrischen Bereichs befindet, um die Innenseiten zu begrenzen, mit der weiteren Besonderheit, daß sie über eine innere Auskleidung aus Karton, Aluminium und Polyethylen verfügten (ES-GM 8 903 322).

Der Erfindung liegt die Aufgabe zugrunde, ein besonderes Verfahren zur Herstellung von Verschalungen für Pfeiler derart zu schaffen, daß die Verschalungen rückgewinnbar und preiswert sowie einfach herstellbar sind.

Erfindungsgemäß ist ein Verfahren zum Herstellen von rückgewinnbaren Verschalungen für Pfeiler mit vieleckigem Aufbau geschaffen, für welche Verschalung ein Rohr den Ausgang bildet.

Damit wird ein rückgewinnbares Verschalungssystem für die Herstellung von Pfeilern mit vieleckigem Querschnitt erreicht, das mit herkömmlichen anderen Systemen nicht erreicht werden konnte und die nachfolgend angegebenen Vorteile aufweist.

1. Sicherheit. Aufgrund seiner Leichtigkeit (beispielsweise hat eine Form mit einer quadratischen Basis von 30 x 30 cm und einer Länge von 3 m ein Gewicht von nur 15 kg, wodurch ein hoher Grad an Handhabungssicherheit für die Bauarbeiter geboten wird).

2. Schnelligkeit. Es wird nur wenig Zeit benötigt (die Herstellung einer Form für ihre Füllung dauert nur etwa 2 Minuten, wobei für die Entschalung eine ähnliche Zeitspanne benötigt wird).

3. Wirtschaftlichkeit. Aufgrund folgender Eigenschaften ist eine besondere Wirtschaftlichkeit gegeben:

a) Hohe Rentabilität aufgrund der durch die kurze Herstellungszeit verursachten Ersparnis.

b) Eine größere Anzahl von verschalten Pfeilern pro Arbeitstag ist ermöglicht, weil so viel Formen wie gewünscht zur Verfügung stehen ohne später stillgelegte Formen vorauszusetzen.

c) Es ist kein chemisches Hilfsmittel erforderlich, wie beispielsweise ein Entschalungsmittel, und es wird eine vollständig fertige Oberfläche für die eventuell erwünschte, spätere Grundierung erzielt.

4. Vielseitigkeit. Die erwünschten Längen sind mittels eines einfachen Schnitts oder durch Hinzufügungen erreichbar.

Das Verfahren zum Herstellen von Verschalungen durch Herstellen eines Rohres, das mit einem späteren Längsschnitt die Basis der Verschalung für Pfeiler darstellt, wird durch Bildung eines laminierten Komplexes aus einer Karton- oder Papiergrundlage verwirklicht, welche mit einer Polyethylenfolie auf beiden Seiten beschichtet wird und bei der außerdem eine dünne Aluminiumfolie auf einer Seite aufgebracht wird. Das Ergebnis ist ein Komplex aus Papier und Polyethylen, bei dem die Prozentsätze der Komponenten je nach Wunsch oder Erfordernis abgeändert werden können, so daß der Komplex beispielsweise aus Polyethylen - Kraftpapier - Aluminium - Polyethylen gebildet ist.

Bei diesem Komplex, bei dem das Polyethylen immer als Element für die Verklebung durch Verschweißen wirkt, werden Eigenschaften erzielt, die denen von Kunststoff ausreichend ähnlich sind, wie Feuchtigkeitsabweisung, Elastizität, hoher Widerstand gegen Strecken (Riß) und Wärmeisolierung.

Im Rahmen des vorgeschlagenen Verfahrens wird, nachdem man einen Wickel des vorstehend erwähnten Komplexes gebildet hat, der Wickel in Längsrichtung zerschnitten, um schmalere Wickel zu erhalten, wobei die Schnitte während des Umspulens durchgeführt werden können.

Dann werden mehrere Wickel parallel zueinander angeordnet auf einer Welle aufgehängt, und zwar derart, daß sie sich um sich selbst drehen können. Dann wird der Anfang jedes Wickelendes erfaßt und so weiter geführt, daß sie an demselben Punkt zusammenlaufen. Die Anzahl der zu verwendenden Wickel ist durch die Dicke des Endproduktes, das erreicht werden soll, bestimmt.

Wenn alle Bänder übereinander liegend zusammengeführt sind, werden sie durch einen Wärmekanal geführt, in dessen Innerem der Komplex einer maximalen Temperatur von 100°C unterworfen wird.

Beim Verlassen des Kanals, wenn sich das Polyethylen im Schmelzzustand befindet, werden die Bänder so aufgeteilt, daß jedes von ihnen auf 50 % der Breite des direkt darunterliegenden Bandes gelegt wird, um eine optimale Arbeit von allen Bändern und eine größtmögliche Gleichmäßigkeit der verschweißten Oberfläche zu erreichen. Dieser Arbeitsgang wird am Umfang eines Metallzylinders ausgeführt, der den Durchmesser des herzustellenden Rohres festlegt.

Die Bänder werden unter sich, beispielsweise mittels eines Riemens, der als Zugmittel für die Bänder wirkt und an zwei seitlichen Kolben eines Metallzylinders gezogen wird, zusammengepreßt, wodurch sich die Bänder, nachdem sie unter sich verschweißt sind, mittels der spiralförmigen Bewegung mit dem Längsvorschub des bereits gebildeten Zylinders bis zu einem veränderlichen Anschlag verschieben, welcher als Schnittsäge wirkt, die das sich ergebende Rohr in jedem Fall in der gewünschten Länge abtrennt.

Die Eigenschaften und Besonderheiten des vorgeschlagenen Verfahrens und die Anwendung des mittels dieses Verfahrens erreichten Produktes werden nachstehend anhand der Zeichnung und einer bevorzugten Ausführungsform näher erläutert; in der Zeichnung zeigen:

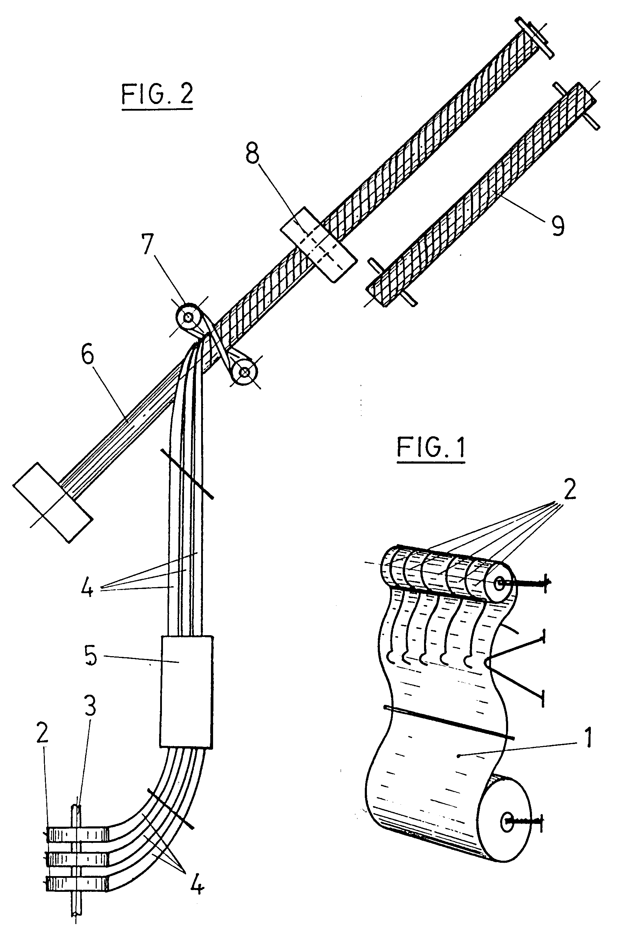

Fig. 1    schematisch die Herstellung von Wickeln eines Komplexes, der aus Schichten aus Polyethylen, wahlweise Kraftpapier und Aluminium und Polyethylen zusammengesetzt ist;

Fig. 2    schematisch die Herstellung eines Rohres, das durch die Übereinanderschichtung von beispielsweise acht Bändern des Komplexes gebildet ist;

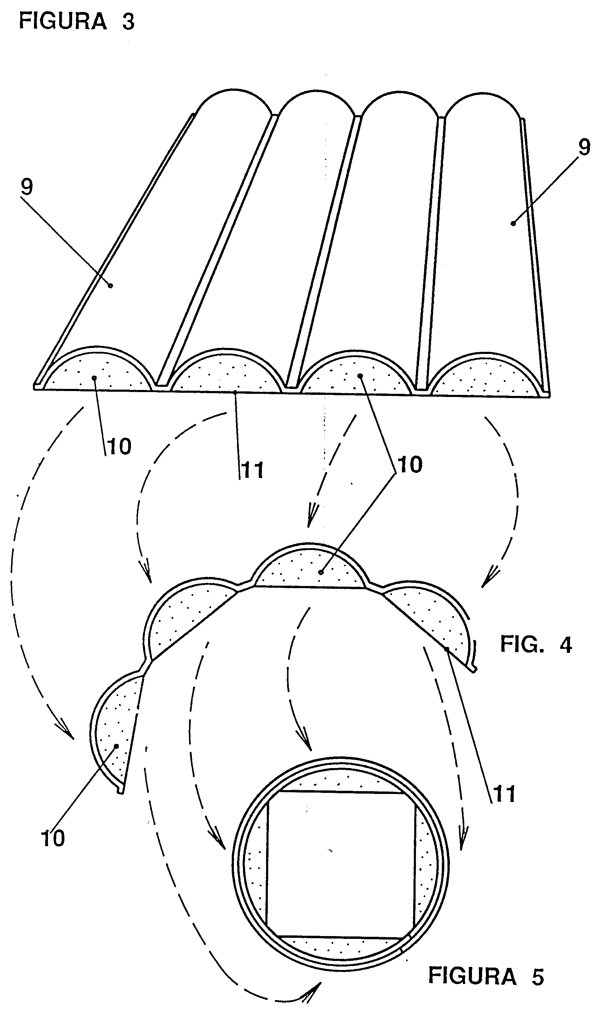

Fig. 3    eines perspektivische Ansicht einer rückgewinnbaren auseinander gefalteten Form, d.h. in der Stellung maximaler Öffnung für den besseren Transport;

Fig. 4    ine Draufsicht auf die Form der Fig. 3 in der Montageanordnung und

Fig. 5    die Form der Fig. 4 in Anordnung als Verschalung beispielsweise auf einer Baustelle.

Ausgehend von einem großen Wickel 1 aus einem Komplex aus übereinanderliegenden Schichten aus Polyethylen, Kraftpapier, Polyethylen, Aluminium und Polyethylen wird eine Mehrzahl von schmaleren Wickeln 2 durch Zerschneiden und Umspulen hergestellt.

Dann werden mehrere Wickel 2 parallel und drehbar an einer Welle 3 aufgehängt. Die Enden der Bänder der Wickel werden einem Drehdorn 6 zugeführt und laufen dort an einem Punkt zusammen, wobei die Bänder 4, die von den Wickeln 2 stammen, durch einen Wärmekanal 5 mit einer Temperatur von weniger als 100°C geführt werden, wodurch in dem Polyethylen ein Schmelzzustand hervorgerufen wird. Danach werden die Bänder auf dem Dorn aufgewickelt, wobei sie so aufgeteilt werden, daß jedes Band auf etwa 50 % der Breite des darunter liegenden Bandes aufliegt. Dieser Arbeitsgang wird mittels des Drehdorns 6 unter Einwirkung von Zugscheiben 7 und bei linearem Vorschub des Dorns 6 durchgeführt.

Dann wird das auf dem Dorn 6 gebildete Produkt mittels einer beweglichen Säge 8 quer durchgeschnitten, wobei ein Rohr 9 der gewünschten Länge verbleibt.

Für rückgewinnbare Verschalungen für geometrische Pfeilerformen mit vieleckigem Querschnitt wird in das Innere des Standardrohres eine PVC-Platte mit einer Dicke von beispielsweise 0,5 mm eingeführt, und der PVC-Platte wird mittels eines Druckmechanismus, der von innen nach außen wirkt, die gewünschte geometrische Form 10 verliehen.

Die Kanten dieser vieleckigen geometrischen Form werden mittels einer Abschrägung veränderlicher Dimension abgeschlossen, um mit den entsprechenden Spalten das Öffnen und die Rückgewinnung der Verschalung zu erleichtern.

Die Innenfläche der Verschalung, die mit dem Beton oder einem anderen Material in Berührung verbleibt, ist in ihrer gesamten Ausdehnung eine PVC-Platte 11, die einige nicht verbesserbare Eigenschaften, was die Abdichtung, die vollständig glatte Oberfläche und die Einfachheit und Leichtigkeit des Entschalens betrifft, aufweist.

Für das Entschalen wird in einer der Abschrägungen der Kanten ein Längsschnitt ausgeführt. Die Lage der Abschrägungen wird auf dem Äußeren des Rohres markiert.

Die Hohlräume, die zwischen der PVC-Platte und dem Rohr verbleiben, werden durch Einspritzen von beispielsweise Polyol und Isocyanat gefüllt; die Hohlräume erreichen dabei eine Dichtigkeit von beispielsweise 28 kg/m$^3$.

Die Enden des Rohres werden mit einer PVC-Platte abgedeckt, um das Polyurethan zu schützen.

Das Ergebnis ist ein Rohr, dessen Inneres den gewünschten geometrischen Querschnitt aufweist und das insgesamt ein haltbares, sehr widerstandsfähiges Ganzes bildet.

Auf der Baustelle wird mit der Verschalung wie nachfolgend angegeben gearbeitet.

Unter Verwendung des Längsschnittes des eigentlichen Verschalungsteils wird eine Armierung in das Innere der Verschalung eingeführt. Dann wird unter Verwendung eines Standardrohres des gleichen Durchmessers die Verschalung so abgedeckt, daß die Längsschnitte der Verschalung und das Standardrohr sich diametral gegenüberliegen.

Von außen und unter Verwendung zylindrischer Flansche wird das Ganze aufgezogen. Die Flansche nehmen etwa 33 % der Länge der Form ein.

Die zylindrischen Flansche bestehen aus dem gleichen Material wie das Rohr, jedoch bei einer Dicke von beispielsweise weniger als 2,5 mm, damit sie verformbar und verstellbar sind.

Um das Teil zu entschalen, wird in umgekehrter Weise vorgegangen.

Als erstes werden die Flansche zerschnitten, die prinzipiell das einzige nicht rückgewinnbare Teil des Systems sind.

Dann wird mittels des Längsschnitts, den das Außenrohr aufweist, dieses herausgezogen, indem es geöffnet wird.

Schließlich wird das eigentliche Verschalungsteil unter Verwendung seines Längsschnittes und des Spaltes der Abschrägung herausgezogen.

Die Verschalung kann durch Anbringung neuer Flansche wiederholt verwendet werden.

Die Anzahl der Verwendungen kann prinzipiell groß sein und hängt von der Durchführung der Verschalungs- und Entschalungsarbeiten ab.

Die rückgewinnbare Verschalung für geometrische Pfeilerformen mit vieleckigem Querschnitt hat einige für das Verschalen solcher Teile besonders geeignete Eigenschaften.

Die Innenfläche aus PVC erleichtert das Entschalen der Pfeiler und verleiht diesen eine glatte Oberfläche.

Die Innendruckbeanspruchungen, die entstehen, bis der Beton erhärtet bzw. abgebunden ist, werden durch die Innenform aus Polyurethan auf den Außenzylinder übertragen, wobei dieser ein Element ist, das aufgrund seiner Geometrie das Geeignetste ist, die Drücke im Inneren mit gleichmäßiger Verteilung aufzunehmen.

Das Verschalungssystem, das jede beliebige Größe des Durchmessers und der Länge zuläßt, macht das Verschalen jedes beliebigen geometrischen Elements möglich.

**Patentansprüche**

1.  Verfahren zum Herstellen von Verschalungen für Pfeiler, **dadurch gekennzeichnet, daß** in einem ersten Arbeitsgang aus einer Kartongrundlage ein laminierter Komplex gebildet wird, auf dessen einen Seite eine Polyethylenfolie und auf dessen anderen Seite eine Aluminiumfolie und eine Polyethylenfolie angeordnet werden, wobei dieser Komplex zu einem Wickel aufgewickelt wird.

2.  Verfahren nach Anspruch 1, **dadurch gekennzeichnet**, daß der aufgewickelte laminierte Komplex abgewickelt und dabei in Breitenrichtung seines Wickels zu einer Vielzahl von Bändern gleicher Breite zerschnitten und zu schmalen Wickeln aufgewickelt wird.

3.  Verfahren nach Anspruch 2, **dadurch gekennzeichnet**, daß die Vielzahl von schmalen Wickeln parallel und drehbar auf einer Welle angeordnet wird, wobei man die freien Bandenden aller schmalen Wickel auf einem drehbaren und linear verschiebbaren Dorn auflaufen läßt.

4.  Verfahren nach Anspruch 3, **dadurch gekennzeichnet**, daß die Bänder der schmalen Wickel, bevor sie den Dorn erreichen, durch einen Wärmekanal mit einer Temperatur von weniger als 100 °C geführt werden, in dem die Polyethylenfolie den Schmelzzustand erreicht.

5.  Verfahren nach Anspruch 4, **dadurch gekennzeichnet**, daß die Bänder auf dem Dorn so positioniert werden, daß jedes Band mit etwa 50 % seiner Breite auf dem unmittelbar darunterliegenden Band aufgelegt wird, wobei sich die Polyethylenfolien der Bänder noch im Schmelzzustand befinden und eine durchgehende verschweißte Oberfläche bilden.

6.  Verfahren nach Anspruch 5, **dadurch gekennzeichnet**, daß der für das Verkleben der Bänder notwendige Druck durch Riemen, die über Scheiben laufen und auf die Bänder einwirken, aufgebracht wird.

7.  Verfahren nach den vorhergehenden Ansprüchen, **dadurch gekennzeichnet**, daß mittels einer dem Dorn in veränderlicher Position zugeordneten Säge von dem auf dem Dorn gebildete Rohr Stücke bestimmter Länge abgeschnitten werden.

8.  Verfahren nach den vorhergehenden Ansprüchen, **dadurch gekennzeichnet**, daß das durch mehrere aufeinandergelegte Schichten von Bändern gebildete Rohr innen so viele sich in Längsrichtung befindliche Stücke umfaßt, wie der zu bildende Pfeiler Seiten aufweist, wobei der Komplex innen mit einer Folie aus flexiblem und durchlässigem Material gefüttert wird und auf das Rohr außen ein weiteres ähnliches Rohr, fakultativ mit einem Längsschnitt versehen, mit dem Schnitt in entgegengegetzter Stellung angeordnet wird, wobei der Schnitt seinerseits durch von Teilen des ähnlichen Rohrs gebildete Flansche umklammert ist, welche die einzigen beim Entschalen wegwerfbaren Teile sind, weil sie auf sich selbst verschlossen sind.

# FIG. 2

# FIG. 1

## FIGURA 3

9

9

10

11

10

FIG. 4

10

11

FIGURA 5